# EUROPÄISCHE PATENTSCHRIFT

(11) **EP 1 139 715 B1**
(45) Veröffentlichungstag und Bekanntmachung des Hinweises auf die Patenterteilung: **06.11.2002**
(21) Anmeldenummer: 00901070.3
(22) Anmeldetag: 07.01.2000
(51) Int. Cl.: A01D 34/73

(54) **MESSERBLATT FÜR EIN FREISCHNEIDEGERÄT**
CUTTING BLADE FOR A TRIMMER
LAME POUR DEBROUSSAILLEUSE

(30) Priorität: 09.01.1999 DE 29900270 U
(43) Veröffentlichungstag der Anmeldung: 10.10.2001
(73) Patentinhaber: Andreas Stihl AG & Co., 71336 Waiblingen (DE)
(72) Erfinder: HOFFMANN, Joachim, D-73207 Plochingen (DE); SCHWEIGERT, Thomas, D-71394 Kernen (DE); SCHNEIDER, Andreas, D-71384 Weinstadt (DE)
(74) Vertreter: Wasmuth, Rolf, Dipl.-Ing.
(86) Internationale Anmeldenummer: EP0000068
(87) Internationale Veröffentlichungsnummer: WO00041554

(56) Entgegenhaltungen:
- FR-A- 2 606 585
- FR-E- 92 900
- GB-A- 2 000 951
- US-A- 2 869 311
- US-A- 2 891 369
- US-A- 3 003 298
- US-A- 3 183 655
- US-A- 3 686 841
- US-A- 4 617 788
- US-A- 5 615 542

## Beschreibung

Die Erfindung betrifft ein Messerblatt für ein Freischneidegerät nach dem Oberbegriff des Anspruchs 1. Aus dem Dokument FR-A-2 606 525 ist ein Messerblatt dieses Art bekannt, wobei die die Schreiden tragenden Endabschnitte in gleicher Richtung aus der Ebene des Mittelabschnittes abgewinkelt sind.

Freischneidegeräte bestehen im wesentlichen aus einem Führungsrohr, welches an einem Ende einen Schneidkopf und an dem anderen Ende einen den Schneidkopf antreibenden Antriebsmotor aufweist. Das Schneidwerkzeug im Schneidkopf ist austauschbar, so daß mit wechselnden Messerblättern sowohl Gras, Unkraut, Schilf, Büsche und sogar dünne Bäume geschnitten werden können. Das Schnittgut wird meist gesammelt und an einem anderen Ort zerkleinert.

Der Erfindung liegt die Aufgabe zugrunde ein Messerblatt für ein Freischneidegerät anzugeben, mit dem nicht nur gute Schnittergebnisse, sondern zugleich ein Häckseln des Schnittgutes erreicht wird.

Die Aufgabe wird erfindungsgemäß nach den kennzeichnenden Merkmalen des Anspruchs 1 gelöst.

Durch die Abwinkelung der die Schneiden tragenden Endabschnitte verläuft die wirksame Schneide nicht nur in der Rotationsebene des Mittelabschnittes, sondern über eine vorgebbare Höhe auch quer zur Rotationsebene. Dadurch wird ein Halm, Stengel oder dergleichen mehrfach geschnitten, also gehäckselt.

Gemäß der Erfindung ist der Endabschnitt mehrfach, insbesondere zweistufig in eine Richtung abgewinkelt, wodurch ein reduzierter Massenanteil im äußeren Messerbereich erreicht wird. Dadurch ergibt sich eine höhere Eigenfrequenz des Messerblattes bei ansonsten hoher Standzeit und geringem Massenträgheitsmoment.

Zum Schutz der senkrechten Schneide am Flügelende ist am etwa horizontalen Endabschnitt des Messerblattes ein über den Flugkreis des Flügelendes hinausragender, nasenförmiger Abweiser vorgesehen. Dieser Abweiser schützt das Flügelende gegen Hindernisse und dient auch der Schneide zum Schutz, sofern der Abweiser in Drehrichtung des Messerblattes dem Flügelende bzw. dessen Schneide vorläuft.

Zur Erzielung einer guten Häckselwirkung erstreckt sich die wirksame Schneide von der in Drehrichtung vorlaufenden Kante des Endabschnittes bis in das freie abgebogene Flügelende, wobei die Schneide insbesondere an der etwa parallel zum Mittelabschnitt liegenden Stirnkante des freien Flügelendes endet. Die Schneide kann durchlaufend ausgebildet oder aus zwei Schneidenabschnitten zusammengesetzt sein.

Wird der horizontale Schneidenabschnitt entgegen der Drehrichtung geneigt, insbesondere bogenförmig gestaltet, wird das der Drehachse zugewandte innere Ende des horizontalen Schneidenabschnittes in Drehrichtung des Messerblattes dem äußeren Ende des horizontalen Schneidenabschnittes vorlaufen, So wird eine abweisende Wirkung beim Auftreffen auf Hindernisse erreicht, wodurch die Belastung des Getriebes sowie des Messerblattes reduziert ist. Eine weitere Reduzierung der Belastung wird dadurch erzielt, daß zumindest der im wesentlichen vertikale Schneidenabschnitt auf der der Drehachse zugewandten wie auch auf der der Drehachse abgewandten Seite angeschärft ist.

In vorteilhafter Weiterbildung der Erfindung ist vorgesehen, die in der Ebene des Mittelabschnittes gemessene Breite des Grundkörpers vom Bereich der Befestigungsöffnung zu den abgebogenen freien Flügelenden der Endabschnitte hin verjüngt auszuführen. Dadurch wird der Massenanteil im äußeren Flügelradius reduziert, was zu einer höheren Eigenfrequenz des Messerblattes und somit zu einer abgesenkten dynamischen Belastung des Messerblattes führt. Aufgrund der Verjüngung ist auch die Torsionssteifigkeit der Flügelenden reduziert. Die Auslegung wird dabei bevorzugt so getroffen, daß bei Auftreffen der Flügelenden auf Hindernisse ein Teil der Schlagenergie in Verformung umgesetzt wird, wodurch wiederum die Belastung des Getriebes im Schneidkopf gesenkt ist.

Das erfindungsgemäße Messerblatt bildet somit ein Häckselmesser, was bei hoher Standzeit, geringer Geräuschentwicklung und hoher Schutzwirkung überragende Schnittleistungen zeigt.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind.

Es zeigen:
- Fig. 1: in schematischer Darstellung ein von einer Bedienungsperson getragenes Freischneidegerät mit einem erfindungsgemäßen Messerblatt,
- Fig. 2: eine Draufsicht auf das erfindungsgemäße Messerblatt,
- Fig. 3: einen Schnitt durch das Messerblatt längs der Linie III-III in Fig. 2,
- Fig. 4: einen Schnitt durch das Messerblatt längs der Linie IV-IV in Fig. 3,
- Fig. 5: eine Ansicht auf das Messerblatt von unten,
- Fig. 6: eine Draufsicht auf ein weiteres Ausführungsbeispiel eines erfindungsgemäßen Messerblattes,
- Fig. 7: einen Schnitt durch das Messerblatt nach Fig. 6 längs der Linie VII-VII,
- Fig. 8: einen Schnitt durch das Messerblatt längs der Linie VIII-VIII in Fig. 7,
- Fig. 9: eine Ansicht auf das Messerblatt nach Fig. 6 von unten.

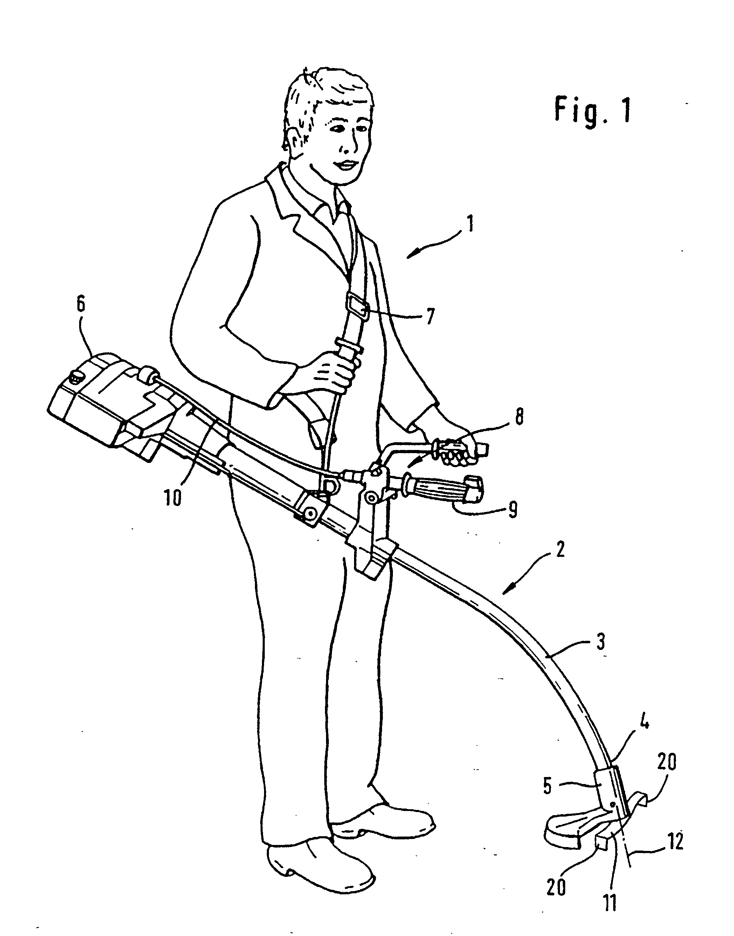

In Fig. 1 ist ein von einer Bedienungsperson 1 getragenes Freischneidegerät 2 gezeigt, welches im wesentlichen aus einem vorzugsweise gebogenen Führungsrohr 3 besteht, das am unteren Ende 4 einen Schneidkopf 5 und am oberen Ende einen Antriebsmotor 6 aufweist. Der Antriebsmotor 6 ist über eine im Führungsrohr gelagerte flexible Welle mit dem Schneidkopf verbunden. Als Antriebsmotor ist zweckmäßig ein Verbrennungsmotor, insbesondere ein Zweitaktmotor, ein gemischgeschmierter Viertaktmotor oder dergleichen einsetzbar. Auch kann die Anordnung eines Elektromotors zweckmäßig sein.

Das Freischneidegerät 2 wird von der Bedienungsperson 1 durch einen Tragegurt 7 getragen und mittels einer Lenkerstange 8 geführt und gehalten, die am Führungsrohr 2 befestigt ist. Die Lenkerstange 8 weist zwei Handgriffe auf, wobei der eine Handgriff 9 als Gasgriff ausgeführt ist und über einen Bowdenzug 10 oder dergleichen mit den entsprechenden Bedienelementen des Antriebsmotors 6 verbunden ist.

An der aus dem Schneidkopf 5 herausragenden Antriebswelle ist ein Messerblatt 11 befestigt, welches um die Drehachse 12 drehend angetrieben ist. Das Messerblatt 11 weist zwei zum Boden abgebogene Flügelenden 20 auf und ist als Häckselmesser genutzt.

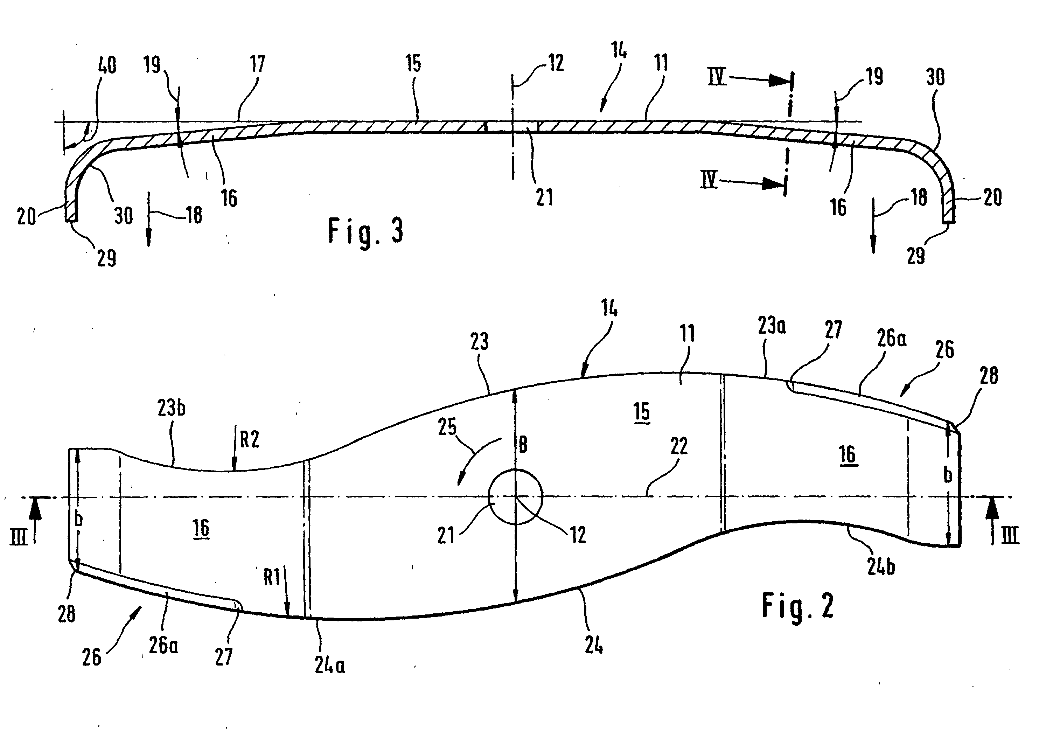

Der genaue Aufbau von Ausführungsbeispielen des Messerblattes geht im einzelnen aus den Fig. 2 bis 9 hervor.

Das Messerblatt 11 besteht aus Metall, insbesondere einem gehärteten und angelassenen Stahl bzw. Stahlblech. Sein Grundkörper 14 besteht aus einem Mittelabschnitt 15 mit in Längsrichtung des Mittelabschnittes 15 anschließenden Endabschnitten. Jeder Endabschnitt 16 ist - wie Fig. 3 zeigt - aus der Ebene 17 des Mittelabschnittes 15 in die gleiche Richtung 18 abgewinkelt. Bevorzugt bildet jeder Endabschnitt 16 mit der Ebene 17 einen Winkel 19, der insbesondere etwa 2° bis 20° oder auch mehr, im Ausführungsbeispiel vorzugsweise 5° beträgt.

Die freien Flügelenden 20 der Endabschnitte 16 sind in Richtung 18 stärker abgebogen als der übrige Endabschnitt 16; im gezeigten Ausführungsbeispiel liegen die Flügelenden 20 etwa parallel zur Drehachse 12 der Antriebswelle des Schneidkopfes 5 (Fig. 1). Zweckmäßig liegen die Flügelenden 20 in einem Winkel 40 von etwa 85° bis 95°, vorzugsweise rechtwinklig zur Ebene 17 des Mittelabschnittes 15. Die Endabschnitte 16 sind somit mehrfach, nämlich zweistufig in Richtung 18 zum Boden abgewinkelt.

Wie aus der Draufsicht aus Fig. 2 zu ersehen, weist der Mittelabschnitt 15 eine zentrale Befestigungsöffnung 21 auf, wobei der Mittelabschnitt 15 quer zu einer Längsachse 22 des Grundkörpers 14 die größte Breite B aufweist. Im Bereich der Flügelenden 20 haben die Endabschnitte 16 eine kleinere Breite b, wobei sich die Breite B des Grundkörpers 14 vom Bereich der Befestigungsöffnung 21 zu den abgebogenen freien Flügelenden 20 der Endabschnitte 16 hin auf die Breite b verjüngt. Dabei hat der Grundkörper 14 in Draufsicht gemäß Fig. 2 eine im wesentlichen leicht S-förmig verlaufende Grundform mit entsprechend geschwungen verlaufenden Längskanten 23 und 24.

Bezogen auf die Drehrichtung 25 des Messerblattes 11 verläuft der vorlaufende Kantenabschnitt 23a bzw. 24a im wesentlichen kreisbogenförmig als Wellenberg gewölbt, während der nachlaufende Abschnitt 23b bzw. 24b ein kreisbogenförmig verlaufendes Wellental bildet. Die vorlaufenden Kanten 23a und 24a können mit deutlich größerem Abstand zur Längsachse 22 liegen als die nachlaufenden Kanten 23b und 24b.

An der vorlaufenden Längskante 23a, 24a eines jeden Endabschnittes 16 ist eine aufgrund des kleinen Winkels 19 im wesentlichen horizontal liegender Schneidenabschnitt 26a ausgebildet, dessen der Drehachse 12 zugewandt liegendes innere Ende 27 in Drehrichtung 25 des Messerblattes 11 dem äußeren Ende 28 des Schneidenabschnittes 26a verläuft. Der Schneidenabschnitt 26a verläuft dabei leicht bogenförmig entgegen der Drehrichtung 25 gewölbt, wobei der Wölbungsradius R1 der vorlaufenden Kante 23a bzw. 24a um ein mehrfaches größer, insbesondere dreifach größer ist als der Wölbungsradius R2 der nachlaufenden Kante 23b bzw. 24b.

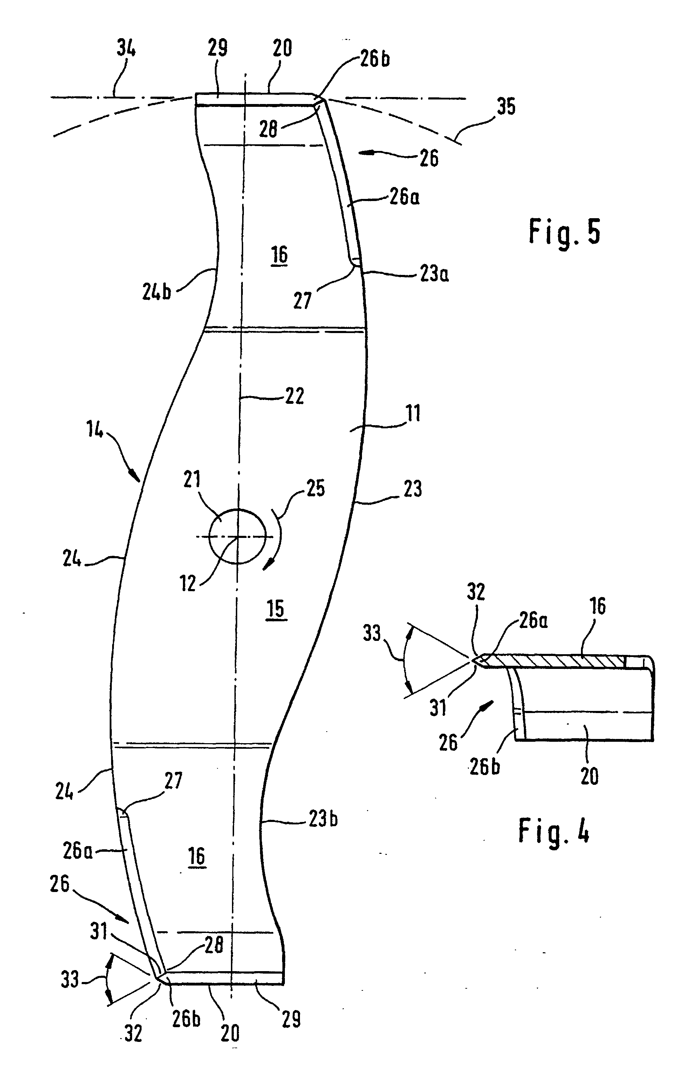

Wie aus den Fig. 4 und 5 des ersten Ausführungsbeispiels zu entnehmen, geht der im wesentlichen horizontale Schneidenabschnitt 26a in einen im wesentlichen vertikalen, d.h. parallel zur Drehachse 12 liegenden Schneidenabschnitt 26b über, wobei der Übergang im Biegebereich 30 der Flügelenden 20 durchgehend als Schneide ausgebildet ist. Der vertikale Schneidenabschnitt 26b geht somit kontinuierlich in den etwa horizontalen Schneidenabschnitt 26a über; beide Schneidenabschnitte 26a und 26b bilden eine gemeinsame, fortlaufende Schneide 26. Dabei läuft der im wesentlichen horizontale Schneidenabschnitt 26a des Endabschnittes 16 den im wesentlichen vertikalen Schneidenabschnitt 26b des freien Flügelendes 20 in Drehrichtung 25 voraus. Die Schneide 26 endet jeweils an der etwa parallel zum Mittelabschnitt 15 liegenden freien Stirnkante 29 eines Flügelendes 20.

Wie die Fig. 4 und 5 zeigen, ist der vertikale Schneidenabschnitt 26b sowohl auf der der Drehachse 12 zugewandten Innenseite 31 als auch auf der der Drehachse abgewandten Außenseite 32 angeschärft. Die beiden angeschärften Seitenflächen schließen einen Winkel 33 von vorzugsweise 60° ein.

Zweckmäßig ist die Schneide 26 über ihre gesamte Länge fortlaufend beidseitig angeschärft, so daß auch am etwa horizontal liegenden Schneidenabschnitt 26a die beiden angeschärften Seitenflächen 31 und 32 einen Winkel 33 von zweckmäßig 60° einschließen.

Aus der Ansicht von unten gemäß Fig. 5 wird deutlich, daß die abgebogenen Flügelenden 20 eben sind und etwa in einer Ebene 34 liegen, auf der die Längsachse 22 des Messerblattes 11 senkrecht steht. Die Flügelenden 20 liegen somit etwa tangential zu ihrem Flugkreis 35 um die Drehachse 12.

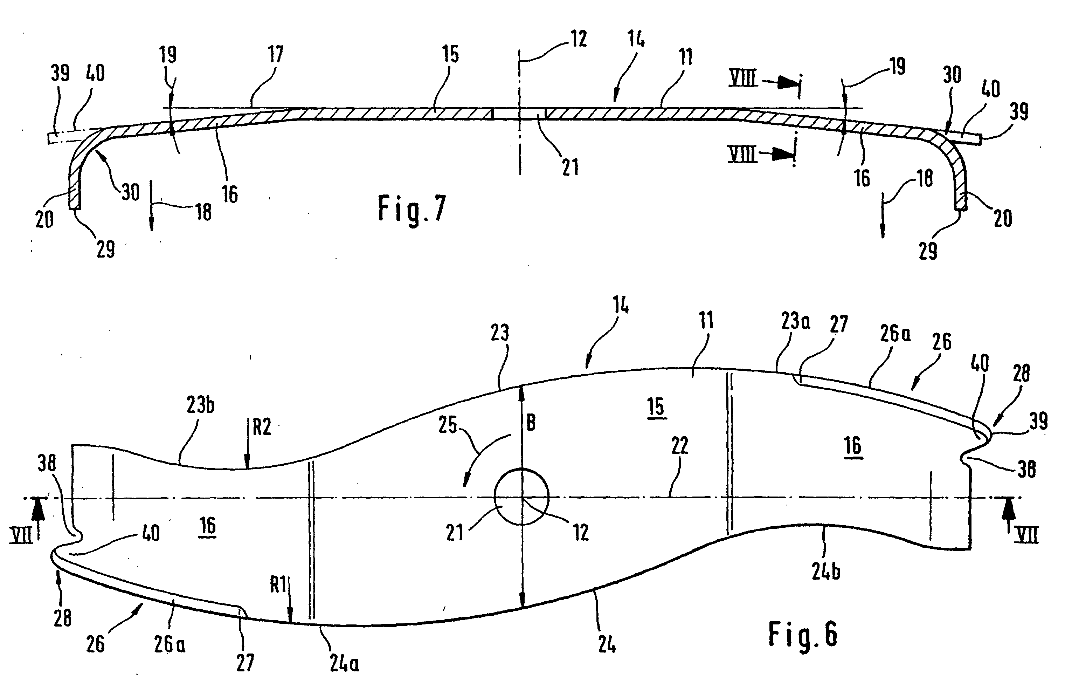

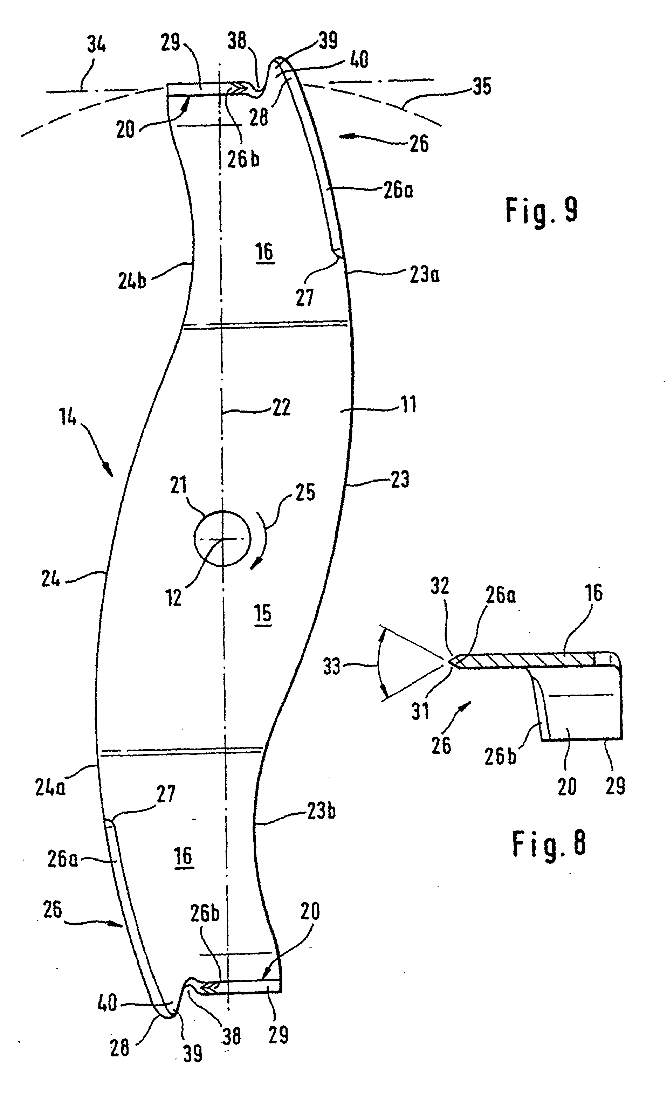

Das Ausführungsbeispiel eines Messerblattes 11 nach den Fig. 6 bis 9 unterscheidet sich von dem Messerblatt nach den Fig. 2 bis 5 im wesentlichen durch Abweiser 40, die am Endabschnitt 16 des Mittelabschnittes 15 etwa im Biegebereich 30 vorgesehen sind. Die Abweiser 40 sind nasenförmig ausgebildet und verlängern den Endabschnitt 16 über die Ebene 34 des abgewinkelten Flügelendes 20 hinaus. Der nasenförmige Abweiser 40 liegt - wie die Fig. 7 und 8 zeigen - in der Ebene des Endabschnittes 16. Die Abweiser 40 ragen über den Flugkreis 35 der Flügelenden 20 bzw. deren vertikale Schneidenabschnitte 26b hinaus, wodurch das-Flügelende 20 vor Anstoßen an Hindernissen geschützt ist.

Der Abweiser 40 ist - wie die Draufsicht gemäß Fig. 6 zeigt - dem Flügelende 20 und dessen vertikalen Schneidenabschnitt 26b in Drehrichtung 25 des Messerblattes 11 vorlaufend angeordnet.

In weiterer Abweichung vom ersten Ausführungsbeispiel eines Messerblattes 11 nach den Fig. 2 bis 5 ist die wirksame Schneide 26 des Messerblattes 11 nach den Fig. 5 und 6 aus sich - in Draufsicht - kreuzenden Schneidenabschnitten 26a und 26b gebildet. Der horizontale Schneidenabschnitt 26a erstreckt sich bis in die Spitze 39 des Abweisers 40, welche das äußere Ende 28 des Messerblattes bildet. Der vertikale Schneidenabschnitt 26b ist an der vorlaufenden Kante des abgewinkelten Flügelendes 20 ausgebildet, wobei der Schneidenabschnitt 26b etwa auf der Höhe des nasenförmigen Abweisers 40 in einer Hohlkehle 38 endet.

Im übrigen entspricht der Aufbau dem des Messerblattes 11 in den Fig. 2 bis 5, weshalb für gleiche Teile gleiche Bezugszeichen eingetragen sind.

## Patentansprüche

1. Messerblatt für ein Freischneidegerät, bestehend aus einem Grundkörper (14) mit einem Mittelabschnitt (15) sowie in Längsrichtung daran anschließenden Endabschnitten (16), mit an den Längskanten (23, 24) der Endabschnitte (16) ausgebildeten Schneiden (26) und einer im Mittelabschnitt (15) vorgesehenen zentralen Befestigungsöffnung (21) zur Montage des Messerblattes (11) an einer Antriebswelle,
**dadurch gekennzeichnet, daß** die die Schneiden (26) tragenden Endabschnitte (16) in gleicher Richtung (18) aus der Ebene (17) des Mittelabschnittes (15) mehrstufig in eine Richtung abgewinkelt sind.

2. Messerblatt nach Anspruch 1,
**dadurch gekennzeichnet, daß** der Endabschnitt (16) mit der Ebene (17) des Mittelabschnittes (15) einen Winkel (19) von etwa 2 bis 20° bildet und ein am Endabschnitt (16) vorzugsweise eben ausgebildetes Flügelende (20) etwa rechtwinklig zum Mittelabschnitt (15) abgebogen ist.

3. Messerblatt nach Anspruch 1 oder 2,
**dadurch gekennzeichnet, daß** am Endabschnitt (16) ein den Flugkreis (35) des Flügelendes (20) überragender, nasenförmiger Abweiser (40) ausgebildet ist.

4. Messerblatt nach Anspruch 3,
**dadurch gekennzeichnet, daß** der Abweiser (40) dem Flügelende (20) vorläuft.

5. Messerblatt nach einem der Ansprüche 1 bis 4,
**dadurch gekennzeichnet, daß** sich die wirksame Schneide (26) von der in Drehrichtung (25) vorlaufenden Kante (23a, 24a) des Endabschnittes (16) bis in das freie abgebogene Flügelende (20) erstreckt und vorzugsweise an der etwa parallel zum Mittelabschnitt (14) liegenden freien Stirnkante (29) des Flügelendes (20) endet.

6. Messerblatt nach einem der Ansprüche 1 bis 5,
**dadurch gekennzeichnet, daß** ein im wesentlichen horizontaler Schneidenabschnitt (26a) des Endabschnittes (16) in Drehrichtung des Messerblattes dem im wesentlichen vertikalen Schneidenabschnitt (26b) des freien Flügelendes (20) vorläuft.

7. Messerblatt nach Anspruch 6,
**dadurch gekennzeichnet, daß** sich der horizontale Schneidenabschnitt (26a) bis in einen am Endabschnitt (16) ausgebildeten Abweiser (40) erstreckt.

8. Messerblatt nach Anspruch 6 oder 7,
**dadurch gekennzeichnet, daß** der etwa horizontale Schneidenabschnitt (26a) vorzugsweise bogenförmig entgegen der Drehrichtung (25) verläuft, derart, daß das der Drehachse (12) zugewandte innere Ende (27) des horizontalen Schneidenabschnittes (26a) in Drehrichtung (25) des Messerblattes (11) dem äußeren Ende (28) des horizontalen Schneidenabschnittes (26a) vorläuft.

9. Messerblatt nach einem der Ansprüche 6 bis 8,
**dadurch gekennzeichnet, daß** der im wesentlichen vertikale Schneidenabschnitt (26b) auf der der Drehachse (12) zugewandten Innenseite (31) wie auf der der Drehachse (12) abgewandten Außenseite (32) angeschärft ist.

10. Messerblatt nach einem der Ansprüche 1 bis 9,
**dadurch gekennzeichnet, daß** sich die Breite (B, b) des Grundkörpers (14) vom Bereich der Befestigungsöffnung (21) zu den abgebogenen freien Flügelenden (20) der Endabschnitte (16) hin verjüngt, wobei in Draufsicht auf den Mittelabschnitt (15) die Längskanten (23, 24) des Grundkörpers (14) leicht S-förmig verlaufen und vorzugsweise der vorlaufende Abschnitt (23a, 24a) der Längskante (23, 24) mit einem stärkeren Radius (R1) gewölbt ist als der nachlaufende Abschnitt (23b, 24b) der Längskante (23, 24).

## Claims

1. A knife blade for a brush cutter consisting of a basic body (14) with a central section (15) and end sections (16) connected longitudinally thereto with cutting edges (26) provided on the longitudinal edges (23, 24) of the end sections (16) and a central fixing aperture (21) provided in the central section (15) for mounting the knife blade (11) on a drive shaft,
**characterised in that**
the end sections (16) bearing the cutting edges (26) are angled in the same direction (18) from the plane (17) of the central section (16) in several stages.

2. A knife blade in accordance with claim 1,
**characterised in that**
the end section (16) forms an angle (19) of some 2° to 20° with the plane (17) of the central section (15) and a preferably flat tip (20) on the end section (16) is curved roughly at right angles to the central section (15).

3. A knife blade in accordance with claim 1 or 2,
**characterised in that**
a nose-shaped guard (40) which projects beyond the circle (35) described by the tip (20) is provided on the end section (16).

4. A knife blade in accordance with claim 3,
**characterised in that**
the guard (40) leads the tip (20).

5. A knife blade in accordance with one of claims 1 to 4,
**characterised in that**
the effective cutting edge (26) extends from the leading edge (23a, 24a) of the end section (16) in the direction of rotation to the free curved tip (20) and preferably ends at the free face (29) of the tip (2) which lies roughly parallel to the central section (14).

6. A knife blade in accordance with one of claims 1 to 5,
**characterised in that**
an essentially horizontal section (26a) of the cutting edge (26) of the end section (16) in the direction of rotation of the knife blade leads the essentially vertical section (26b) of the cutting edge (26) of the free tip (20).

7. A knife blade in accordance with claim 6,
**characterised in that**
the horizontal cutting edge section (26a) extends as far as a guard (40) provided on the end section (16).

8. A knife blade in accordance with claims 6 or 7,
**characterised in that**
the roughly horizontal cutting edge section (26a) runs counter to the direction of rotation preferably in a curve in such a manner that the inner end (27) of the horizontal cutting edge section (26a) facing the axis of rotation (12) in the direction of rotation (25) of the knife blade (11) leads the outer end (28) of the horizontal cutting edge section (26a).

9. A knife blade in accordance with one of claims 6 to 8,
**characterised in that**
the essentially vertical cutting edge section (26b) is scarfed on the inner side (31) facing towards the axis of rotation (12) and on the outer side (32) facing away from the angle of rotation (12).

10. A knife blade in accordance with one of claims 1 to 9,
c**haracterised in that**
the width (B, b) of the basic body (14) tapers from the area of the fixing aperture (21) towards the curved, free tips (20) of the end sections (16), in a top view of the central section (15) the longitudinal edges (23, 24) of the basic body (14) running in a slight S-shape and the leading section (23a, 24a) of the longitudinal edge (23, 24) preferably being curved with a larger radius (R1) than the trailing section (23b, 24b) of the longitudinal edge.

## Revendications

1. Lame de coupe pour une débroussailleuse, constituée par un corps de base (14) comportant une partie médiane (15) ainsi que des parties d'extrémité (16), qui se raccordent à la partie médiane dans la direction longitudinale, des tranchants (26) formés sur les bords longitudinaux (23, 24) des parties d'extrémité (16), et une ouverture centrale de fixation (29) prévue dans la partie médiane (15) et servant au montage de la lame de coupe (11) sur un arbre d'entraînement, **caractérisée en ce que** les parties d'extrémité (16), qui portent les tranchants (26), sont coudées dans un sels, selon un étagement multiple, dans le même sens (18) à partir du plan (17) de la partie médiane (15).

2. Lame de coupe selon la revendication 1, **caractérisée en ce que** la partie d'extrémité (16) fait, avec le plan (17) de la partie médiane (15) un angle (19) compris entre environ 2 et 20° et qu'une extrémité en forme d'aile (20) réalisée de préférence avec une forme plane sur la partie d'extrémité (16) est coudée approximativement à angle droit par rapport à la partie médiane (15).

3. Lame de coupe selon la revendication 1 ou 2, **caractérisée en ce que** sur la partie d'extrémité (16) est formé un déflecteur (40) en forme de bec qui fait saillie au-delà du cercle de déplacement (35) de l'extrémité (20) en forme d'aile.

4. Lame de coupe selon la revendication 3, **caractérisée en ce que** le déflecteur (40) est en avant par rapport à l'extrémité (20) en forme d'aile.

5. Lame de coupe selon l'une des revendications 1 à 4, **caractérisée en ce que** le tranchant actif (26) s'étend depuis le bord (23a, 24a) de la partie d'extrémité (16), qui est situé en avant dans le sens de rotation (25), jusque dans l'extrémité libre coudée (20) en forme d'aile et se termine de préférence au niveau d'un bord frontal libre (29) de l'extrémité (20) en forme d'aile, qui est approximativement parallèle à la partie médiane (14).

6. Lame de coupe selon l'une des revendications 1 à 5, **caractérisée en ce qu'**une partie sensiblement horizontale (26a) du tranchant de la partie d'extrémité (16) est en aval, dans le sens de rotation de la lame de coupe, par rapport à la partie essentiellement verticale (26b) du tranchant de l'extrémité libre (20) en forme d'aile.

7. Lame de coupe selon la revendication 6, **caractérisée en ce que** la partie horizontale (26a) du tranchant s'étend jusque dans un déflecteur (40) formé sur la partie d'extrémité (16).

8. Lame de coupe selon la revendication 6 ou 7, **caractérisée en ce que** la partie approximativement horizontale (26a) du tranchant s'étend de préférence avec une forme arquée en sens opposé au sens de rotation (23) de telle sorte que l'extrémité intérieure (27), tournée vers l'axe de rotation (12), de la partie horizontale (26a) du tranchant s'étende, dans le sens de rotation (25) de la lame de coupe (30), en avant de l'extrémité extérieure (28) de la partie horizontale (26a) du tranchant.

9. Lame de coupe selon l'une des revendications 6 à 8, **caractérisée en ce que** la partie essentiellement verticale (26b) du tranchant est affûtée sur le côté intérieur (31) tourné vers l'axe de rotation (12), de même que sur le côté extérieur (32) tourné à l'opposé de l'axe de rotation (12).

10. Lame de coupe selon l'une des revendications 1 à 9, **caractérisée en ce que** la largeur (B,b) du corps de base (14) se rétrécit depuis la partie de l'ouverture de fixation (21) en direction des extrémités libres coudées (20) en forme d'aile des parties d'extrémité (16), les bords longitudinaux (23, 24) du corps de base (14) s'étendant légèrement en forme de S selon une vue en plan de la partie médiane (15), et de préférence la partie avant (23a, 24a) du bord longitudinal (22, 23, 24) étant cintrée avec un rayon (R1) supérieur à celui de la partie arrière (23b, 24b) du bord longitudinal (23, 24).
